# EUROPÄISCHE PATENTSCHRIFT

(11) **EP 3 154 165 B1**
(45) Veröffentlichungstag und Bekanntmachung des Hinweises auf die Patenterteilung: **28.07.2021**
(21) Anmeldenummer: 15188365.9
(22) Anmeldetag: 05.10.2015
(51) Int. Cl.: H02K 7/02, H02K 5/24

(54) **SCHWUNGRADEINHEIT MIT DÄMPFUNGSEINRICHTUNG**
FLYWHEEL UNIT WITH DAMPING DEVICE
UNITE DE VOLANT ET DISPOSITIF D'AMORTISSEMENT

(43) Veröffentlichungstag der Anmeldung: 12.04.2017
(73) Patentinhaber: Enrichment Technology Company Ltd. Zweigniederlassung Deutschland, 52409 Jülich (DE)
(72) Erfinder: Winter, Michael, 52064 Aachen (DE); Landmesser, Jens, 41812 Erkelenz (DE)
(74) Vertreter: FARAGO Patentanwälte

(56) Entgegenhaltungen:
- WO-A1-2010/074752
- DE-C- 356 356
- DE-C1- 19 608 099
- DE-C1- 19 709 674
- US-A1- 2010 001 697
- POST R F ET AL: "FLYWHEELS", SCIENTIFIC AMERICAN, SCIENTIFIC AMERICAN INC., NEW YORK, NY, US, Bd. 229, Nr. 6, 1. Dezember 1973 (1973-12-01), Seiten 17-23, XP002046856, ISSN: 0036-8733

## Beschreibung

### Gebiet der Erfindung

Die Erfindung bezieht sich auf eine Schwungradeinheit mit einer Dämpfungseinrichtung zur Befestigung der Schwungradeinheit in einem Schwungrad-Energiespeicher und auf einem Schwungrad-Energiespeicher mit solchen Schwungradeinheiten.

### Hintergrund der Erfindung

Regenerative Energiequellen werden heutzutage gerade aufgrund der besseren Umweltverträglichkeit gegenüber konventionellen Energieerzeugungs-einrichtungen vermehrt aufgebaut. Da diese regenerativen Energiequellen in der Regel ihre Energie nicht kontinuierlich liefern, besteht ein großer Bedarf an Energiespeichern. Schwungräder werden für die Energiespeicherung in Form von Rotationsenergie verwendet. Über geeignete Einkopplungsmittel kann elektrische Energie in diesen Energiespeichern in Form von Rotationsenergie gespeichert und bei Bedarf wieder zurück in elektrische Energie umgewandelt und an einen Verbraucher abgegeben werden. Derartige Schwungrad-Energiespeicher müssen eine große Speicherkapazität aufweisen, weshalb sie mit einer Vielzahl nebeneinander angeordneten Schwungradeinheiten ausgestattet sind, deren Speicherkapazität sich zu einer Gesamt-Energiespeicherkapazität addieren. Die Schwungradeinheiten haben größtenteils einen Hohlzylinder als Rotor, der entsprechend seiner Drehzahl und Masse eine bestimmte Menge an Energie speichert. Zur Bereitstellung einer möglichst hohen Speicherkapazität eines solchen Schwungradeinheit werden die Rotoren bei Drehzahl bis zu 50000 U/min und mehr betrieben. Zum Schutz der Umgebung vor Rotorabstürzen werden die Rotoren in gekapselten Gehäusen (Maschinengehäuse der Schwungradeinheit) betrieben.

Das Dokument DE 197 09 674 C1 offenbart eine Schwungradeinheit gemäß dem Oberbegriff des Anspruchs 1.

Im Falle eines Absturzes eines bei einer solchen hohen Drehzahl rotierenden Rotors, ein sogenannter Crash, treten durch die Wechselwirkung zwischen Rotor und Maschinengehäuse kurzzeitig sehr hohe Kräfte auf die Verankerung des Maschinengehäuses im Schwungrad-Energiespeicher auf. Bei einer festen Verankerung des Maschinengehäuses im Boden des Schwungrad-Energiespeichers, beispielsweise in seinem Betonfundament, werden die durch den Absturz hervorgerufenen Vibrationen des Maschinengehäuses auf benachbarte Schwungradeinheiten übertragen, die dadurch gestört werden und unter Umständen ebenfalls einen Absturz erleiden können. Eine solche Kettenreaktion kann zur Zerstörung des gesamten Schwungrad-Energiespeichers führen, was zu vermeiden ist.

Durch handelsübliche Federdämpfer können Schwingungen des Maschinengehäuses im Absturzfall gedämpft werden. Aufgrund der bei diesen Umdrehungsgeschwindigkeiten auftretenden hohen Lasten müssten diese Dämpfungselemente allerdings sehr groß ausgelegt werden, um das Absturzmoment ausreichend zu reduzieren. Die Schwungrad-Energiespeicher besitzen aus Maschinengründen dagegen eine kompakten Bauweise, damit einerseits ein effektiver Betrieb des einzelnen Energiespeicher ermöglicht wird und andererseits eine modularen Anlage aus einer Vielzahl an Schwungrad-Energiespeichern nur einen geringen Raumbedarf in Anspruch nimmt. Aufgrund des begrenzten Bauraums im Schwungrad-Energiespeichers unterhalb des Maschinengehäuses reichen die dafür passenden handelsüblichen Federdämpfer nicht aus, um die Kräfte im Absturzfall aufzunehmen und ausreichend zu dämpfen, damit eine Übertragung der Kräfte auf benachbarte Schwungradeinheiten vermieden werden kann. Insbesondere die hohen Torsionslasten beim Absturz führen zu einem Versagen der verfügbaren Schwingungsdämpfer. Grundsätzlich sollte aber eine Zerstörung oder Beschädigung des Fundaments beim Einzelabsturz des Rotors vermieden werden.

Es wäre daher wünschenswert, eine Dämpfungseinrichtung zur Verfügung zu haben, mit denen die Kräfte beim Absturz eines hochdrehenden (mit hoher Drehzahl drehenden) Rotors in einem Schwungrad-Energiespeichers so gedämpft werden können, dass eine Schädigung der benachbarten Schwungradeinheiten ausgeschlossen werden kann.

### Zusammenfassung der Erfindung

Es ist eine Aufgabe der vorliegenden Erfindung, eine Schwungradeinheit bereitzustellen, die so ausgestaltet ist, dass die freiwerdenden Kräfte beim Absturz eines hochdrehenden Rotors in einem Schwungrad-Energiespeichers so aufgenommen werden können, dass eine Schädigung der benachbarten Schwungradeinheiten in einem kompakten Schwungrad-Energiespeicher mit mehreren Schwungradeinheiten ausgeschlossen werden kann.

Diese Aufgabe wird gelöst durch eine Schwungradeinheit für einen Schwungrad-Energiespeicher umfassend einen Rotor, ein den Rotor umschließendes Maschinengehäuse mit einer Unterseite, und eine an der Unterseite des Maschinengehäuses befestigte Dämpfungseinrichtung zur Befestigung der Schwungradeinheit auf einem geeigneten Fundament, wobei die Dämpfungseinrichtung eine untere Standeinheit zur Befestigung auf dem Fundament, eine obere Standeinheit zur Befestigung an der Unterseite des Maschinengehäuses und eine Membran, die die untere Standeinheit mit der oberen Standeinheit verbindet, umfasst, wobei die obere und untere Standeinheit sowie die Membran so ausgestaltet sind, dass die Membran eine freitragende biegeweiche Verbindung zwischen oberer und unterer Standeinheit herstellen kann.

In der erfindungsgemäßen Schwungradeinheit werden die freiwerdenden Kräfte beim Absturz eines hochdrehenden Rotors über die sich unter dem Maschinengehäuse befindliche und an ihm befestigte Membran so aufgenommen, dass eine Schädigung der benachbarten Schwungradeinheiten in einem kompakten Schwungrad-Energiespeicher mit mehreren Schwungradeinheiten ausgeschlossen werden kann. Hierbei ist die Verankerung durch die mittels Membran über die unteren und oberen Standeinheiten geschaffene freitragenden Verbindung zwischen Maschinengehäuse und Fundament axial und biegeweich ausgeführt, wobei die Rotationsachse in dieser Verankerung aufgrund der durch die Anordnung der Membran auf der unteren Standeinheit hergestellte Limitierung der Beweglichkeit der Membran in Richtung der Rotationsachse weiterhin steif geführt ist. Die Begriffe "obere Standeinheit" und "untere Standeinheit" bezeichnet die Anordnung der jeweiligen Standeinheiten näher an der Unterseite des Maschinengehäuses (ober Standeinheit) oder weiter von der Unterseite entfernt als die obere Standeinheit (=untere Standeinheit). Als biegeweich wird hierbei ein System oder eine Verbindung bezeichnet, die eine erste Biegeeigenfrequenz kleiner als 25 Hz, eine erste axiale Eigenfrequenz kleiner 100 Hz und eine erste Torsionseigenfrequenz kleiner 300 Hz besitzt. Die grundsätzlichen Messverfahren zur Bestimmung voranstehender Frequenzen sind dem Fachmann bekannt. Diese Eigenschaften werden einerseits vom Material der Membran und andererseits von deren Dicke sowie der Masse des gesamten Systems bzw. der Verbindung beeinflusst. Hierbei wird die Membran bei gleichem Material umso steifer, je dicker sie gefertigt ist. Bei gleicher Dicke wird die Membran umso flexible (biegeweicher), je weicher das Material der Membran ist. Die Membran ermöglicht, dass die Maschine, insbesondere das Maschinengehäuse, sich in Richtung der Rotationsachse bewegen und um diese taumeln kann, wobei mittels der festen Einspannung der Rotationsachse eine Abführung des Absturzmoments über die Dämpfungseinrichtung erreicht wird. Eine solche Dämpfungswirkung mit einer günstigen Kombination zwischen weicher Anbindung in einer Richtung und steifer Anbindung in der anderen Richtung lässt sich mit üblichen Dämpfungskomponenten nicht oder nur auf Kosten eines großen Bauraums realisieren, was eine kompakte Bauweise eines Schwungrad-Energiespeichers verhindern würde. Außerdem würden die hohen Torsionsbelastungen im Falle eines Absturzes bei herkömmlichen Dämpfungskomponenten zu einem Versagen der Schwingungsdämpfer führen. Die Vorteile der erfindungsgemäßen Schwungradeinheit mit der erfindungsgemäßen Dämpfungseinrichtung liegen in ihren geringen benötigten Bauraum, dem einfachen und kostengünstigen Aufbau der Dämpfungseinrichtung, der einfachen Montage und der guten Erreichbarkeit aller Maschinenanschlüsse nach der Montage.

Die Dämpfungseinrichtung ist dabei so ausgestaltet, dass sie das Gewicht des Maschinengehäuses und des Rotors tragen kann. Dafür sind die untere und obere Standeinheit beispielsweise aus Metall, insbesondere Stahl, mit einer an das Gewicht des Maschinengehäuses und des Rotors angepassten Wandstärke gefertigt. Die untere Standeinheit kann beispielsweise als zylinderförmiger Ring mit Aussparungen und dazwischen angeordneten Erhebungen in Richtung der Membran ausgestaltet sein. Die Erhebungen bilden dann Auflagefläche für die Membran. Alternativ dazu könnte eine Vielzahl an Sockeln in einer geometrischen Anordnung, beispielsweise in Ringform auf einer Unterlage, zueinander als untere Standeinheit angeordnet sein, wobei deren Oberseiten eine gemeinsame Auflagefläche für die Membran bilden, wobei die Auflagefläche zwischen den Sockeln unterbrochen ist. Diese geometrische Anordnung kann alternativ auch in einer anderen Geometrie zueinander ausgestaltet sein.

Die Membran bezeichnet eine relativ zur Höhe der unteren und oberen Standeinheit gesehene dünne Scheibe, die aus einem Material gefertigt ist, das durch Verformung eine taumelnde Bewegung des Maschinegehäuses um die Rotationsachse des Rotors zulässt. Geeignete Membranen sind beispielsweise Stahlbleche mit einer auf das Gewicht und die im Falle eines Absturzes auftretenden Torsionskräfte angepasst Dicke, beispielsweise 15mm für Rotoren mit einem axialen Massenträgheitsmoment von 1,2kgm², einer Gehäusemasse von 785kg und einer Drehzahl von 750Hz. Stahl besitzt für diese Zwecke eine hohe Belastbarkeit bei ausreichender Flexibilität zur Bereitstellung eine Biegeweichheit. Die Verformung der Membran führt zu einer zumindest teilweisen Entkopplung der Bewegung des Maschinengehäuses vom Fundament. Vorzugsweise besitzt das Material der Membran dazu eine Festigkeit größer 250MPa. Geeignete Materialien für eine erfindungsgemäße Membran wären beispielsweise Metalle (z.B. Stahl) oder sogenannte CFK-Verbundmaterialien. Die Membran ist dabei fest auf der Auflagefläche der unteren Standeinheit aufgespannt. Dazu kann die Membran beispielsweise mittels Schraubverbindungen und/oder eines Montage- oder Klemmrings auf der Auflagefläche befestigt sein. Die freitragende Verbindung bezeichnet dabei den Bereich der Membran, der nicht von unten (der der Unterseite des Maschinengehäuses abgewandten Seite der Membran) durch die untere Standeinheit gegenüber dem Gewicht des Maschinengehäuses abgestützt wird. Die Befestigung des Maschinengehäuses auf der Membran ist dabei indirekt über die obere Standeinheit, die zwischen dem Maschinengehäuse und der Membran angeordnet ist, ausgeführt. Die obere Standeinheit kann dabei wie die untere Standeinheit ausgeführt sein, beispielsweise ebenfalls als zylinderförmiger Ring mit Aussparungen und dazwischen angeordneten Erhebungen in Richtung der Membran. Die Erhebungen bilden dann Auflagefläche der oberen Standeinheit auf der Membran. Alternativ dazu könnte eine Vielzahl an Maschinensockeln in einer geometrischen Anordnung, beispielsweise in Ringform auf einer Unterlage, zueinander als obere Standeinheit angeordnet sein, wobei deren Unterseiten eine gemeinsame Auflagefläche auf der Membran bilden, wobei die Auflagefläche zwischen den Sockeln unterbrochen ist. Diese geometrische Anordnung kann alternativ auch in einer anderen Geometrie zueinander ausgestaltet sein.

In einer Ausführungsform umfasst die Membran ein Membranpaket aus einer Mehrzahl an übereinander angeordneten Materialschichten. In einer Ausführungsform sind dabei die Materialschichten lediglich an Montagepunkten fest miteinander verbunden. In anderen Ausführungsformen können die Materialschichten auch anders miteinander verbunden sein oder direkt oder indirekt in Kontakt stehen. Vorzugsweise ist die Membran vollständig aus einem solchen Membranpaket gebildet. Die benachbarten Materialschichten reiben bei einem sich bewegenden Maschinegehäuse aneinander und nehmen daher mehr Energie auf beziehungsweise dämpfen eine Bewegung des Maschinengehäuses noch effektiver als eine Membran aus einem kompakten einteiligen Material. In einer bevorzugten Ausführungsform umfasst das Membranpaket zumindest teilweise abwechselnd angeordnete tragende und dämpfende Materialschichten. Als tragende Materialschichten können beispielsweise Metallschichten (z.B. Stahlschichten oder Stahlplatten) und als dämpfende Materialschichten Schichten aus CFK-Verbundmaterial verwendet werden.

Der Begriff "Rotor" bezeichnet hier die Gesamtheit der Teile, die in Rotation versetzt werden. Die Rotoren können verschiedene Formen haben. Bei der vorliegenden Erfindung hat der Rotor einen Rotationskörper mit zylindrischer Form (Zylinder). Der Rotationskörper ist die Komponente, die hauptsächlich die Energie in Form von Bewegungsenergie speichert. Die restlichen Komponenten verbinden den Rotationskörper mit einem Antrieb bzw. mit einer Lagerung für den Rotor, damit dieser möglichst verlustfrei rotieren kann. Der Rotor kann beispielsweise ein an beiden Seiten (Enden) offener oder geschlossener Zylinder sein, der über mindestens zwei Naben mit jeweiligen Lagern (erstes Lager für erste Nabe und zweites Lager für zweite Nabe) verbunden ist. Diese Verbindung wird dabei nicht direkt durch die Naben hergestellt, sondern durch einen Zapfen, der in der jeweiligen Nabe befestigt ist. In einer anderen Ausführungsform kann der Rotor einen durchgehenden Schaft umfassen, auf dem die Naben angeordnet sind. Die Enden des Schafts werden dabei als Zapfen bezeichnet. Die Naben können je nach Anordnung im Zylinder diesen zumindest teilweise zu seinen Enden hin abschließen. Die Naben können dabei im Rotationskörper in gleicher Orientierung oder Ausrichtung angeordnet. Die Naben können im Rotationskörper in jeder beliebigen geeigneten Position angeordnet sein. Die Naben können dabei im Rotationskörper mit dem Rotationskörper verbunden sein. In einer Ausführungsform sind die Naben im Rotationskörper im Bereich der offenen Enden angeordnet. Der Begriff "im Bereich" bezeichnet den Bereich des Rotationskörpers, der sich vom offenen Ende entlang des Rotationskörpers bis zu der Position erstreckt, bei der sich eine Nabe mit Zapfen gerade mit dem Zapfen über das offene Ende des Rotationskörpers hinausragt. Die Verbindung mit dem Rotationskörper kann dabei durch Verpressen und Verkleben oder eine andere geeignete Technik ausgeführt werden. Der Rotationskörper und/oder die Naben können dabei aus kohlefaserverstärktem Kunststoff (CFK-Laminat) gefertigt sein.

Zur Bereitstellung der möglichst hohen Speicherkapazität dieser Schwungradeinheit werden die Rotoren bei Drehzahlen bis zu 50000 U/min und mehr betrieben. Damit der Rotor mit möglichst geringen Verlusten rotieren kann, wird der Rotor in einem Vakuum betrieben. Dazu muss der Rotor mittels des Maschinengehäuses vakuumdicht eingekapselt sein. Simultan dazu dient das Maschinegehäuse auch zum Schutz der Umgebung vor Rotorabstürzen und ist daher in der Regel aus Metall, insbesondere Stahl mit einer an die bei einem Absturz zu erwartenden freiwerdenden Kräfte angepassten Dicke, beispielsweise 25mm für Rotoren mit einem axialen Massenträgheitsmoment von 1,2kgm², einer Gehäusemasse von 785kg und einer Drehzahl von 750Hz. Die Form des Maschinengehäuses ist dabei vorzugsweise an die Form des Rotors angepasst. Beispielsweise besitzt das Maschinengehäuse eine zylindrische Form mit einem Deckel und einem Bodenteil, der in dieser Erfindung als Unterseite bezeichnet wird. Die Unterseite bezeichnet dabei die Seite, die bei einer zum Erdboden hin senkrecht angeordneten Rotationsachse dem Erdboden zugewandt ist. Entsprechend ist der Deckel der entgegengesetzten Seite, beispielsweise dem Dach eines Schwungrad-Energiespeicher, zugewandt.

In einer Ausführungsform umfasst die untere Standeinheit mindestens drei zueinander separate Bodensockel mit einer ersten Bodensockelhöhe, auf denen die Membran aufgespannt ist, wobei die Bodensockel so zueinander angeordnet sind, dass sich die Projektion des Mittelpunkts der Unterseite entlang der Rotationsachse des Rotors innerhalb eines durch die separaten Bodensockel aufgespannten Stützfläche befindet. Hierbei definieren die Auflageflächen der Bodensockel die Eckpunkte der Stützfläche. Da das Maschinengehäuse in der Regel symmetrisch den Rotor umschließt, liegt der Schwerpunkt des Maschinengehäuses mit Rotor in der Regel auf der Rotationsachse oberhalb des Mittelpunkts oder weicht in seiner radialen Lage senkrecht zur Rotationsachse nur unwesentlich davon ab. Die auf den Bodensockeln aufgespannte Membran bietet in dieser Anordnung eine stabile Unterstützung für das darauf montierte Maschinegehäuse, die gegen seitliches Verkippen von den Bodensockeln ausreichend abgestützt ist. Die Verwendung von Bodensockeln ermöglicht eine einfache und schnell zu montierende Dämpfungseinrichtung unterhalb des Maschinengehäuses. Bei drei oder mehr Bodensockeln ist die Dämpfungseinrichtung außerdem ausreichend stabil, um Absturzlasten auffangen zu können. In einer weiteren Ausführungsform sind die separaten Bodensockel der unteren Standeinheit dabei in einer Ebene parallel zur Grundfläche symmetrisch zueinander um die Rotationsachse des Rotors angeordnet.

In einer bevorzugten Ausführungsform umfasst die untere Standeinheit höchstens sechs separate Bodensockel. Durch diese maximale Anzahl an Bodensockeln wird eine durch die Membran hergestellte ausreichend große freitragende Verbindung zwischen den Bodensockeln bereitgestellt, deren Flexibilität und Biegeweichheit ausreichend ist, um die Absturzlasten aufnehmen und dämpfen zu können. Durch die Anzahl und Anordnung der Bodensockel können die Steifigkeitsverhältnisse (Grad der Biegeweichheit) der freitragenden Verbindung der Membran nach Wunsch beeinflusst werden.

In einer weiteren Ausführungsform umfasst die obere Standeinheit eine Anzahl an Maschinensockel mit einer Maschinensockelhöhe, die zwischen Membran und Grundfläche des Maschinengehäuses auf den freitragenden Bereichen der Membran an jeweiligen Maschinensockelpositionen mit der Membran verbunden sind. Durch die Maschinensockel ist die Unterseite des Maschinengehäuses nicht unmittelbar, sondern indirekt über die Maschinensockel mit der Membran verbunden. Dadurch wird sichergestellt, dass das Maschinengehäuse ausschließlich auf freitragenden Verbindungen der Membran zwischen den Bodensockeln befestigt ist. Dadurch können die Absturzlasten besonders gut aufgenommen und gedämpft werden.

In einer bevorzugten Ausführungsform befinden sich die Maschinesockelpositionen jeweils in dem zwischen zwei benachbarten Bodensockeln und der Rotationsachse des Rotors ausgespannten Membransegment. Hierdurch wird die Dämpfungswirkung der biegeweichen Membran besonders gut ausgenutzt. In einer bevorzugten Ausführungsform ist dabei die Anzahl an Maschinensockeln gleich der Anzahl an Bodensockeln und die Maschinesockelpositionen in der Membranebene besitzt jeweils die gleiche Entfernung zu den jeweiligen benachbarten Bodensockeln. Damit befinden sich die Maschinesockel mittig zwischen den Bodensockeln, sodass die biegeweiche Verbindung vom Maschinensockel zu den benachbarten Bodensockeln am längsten ist. Hierdurch wird die Dämpfungswirkung der biegeweichen Membran für die jeweilige verwendete Membran maximiert.

In einer weiteren Ausführungsform umfasst die untere Standeinheit zusätzlich ein oder mehrere Dämpfungselemente, die unterhalb der Maschinesockelpositionen angeordnet sind und die die Membran gegen das Fundament federnd abstützen. Damit kann die Dämpfungseinrichtung auch für andere Schwungradeinheiten mit anderen Gewichten bei gleichen Dämpfungseigenschaften verwendet werden. Die dämpfende Wirkung der Dämpfungselemente kann über eine entsprechende Materialwahl für die Dämpfungselemente wie gewünscht angepasst werden. Die Dämpfungselementente können beispielsweise als Gummipuffer mit einer Höhe gleich der Bodensockelhöhe ausgestaltet sein. Zudem können Membranen verwendet werden, deren Material eine für das Gewicht des Maschinengehäuses mit Rotor nicht ausreichende Festigkeit besitzt, da die Dämpfungselemente die Membran zwischen den Bodensockeln zusätzlich unterstützen.

In einer weiteren Ausführungsform umfasst die Membran eine mittlere Öffnung und eine um die Öffnung umlaufende und auf den Bodensockeln befestigte geschlossene Fläche. Die geschlossene Fläche stellt eine freitragende Verbindung zwischen den benachbarten Bodensockeln her, deren Auflagefläche ausreichend groß ist, um darauf das Maschinegehäuse oder die Maschinesockel zu positionieren. Die Größe und Form der Stützfläche wird durch die mittlere Öffnung nicht verändert, da der Bereich der Öffnung auch in geschlossenen Zustand nicht oder nur unwesentlich zur Stützung beiträgt, sondern nur die äußeren Bereiche, in denen das Maschinengehäuse oder die Maschinensockel aufliegen. Die freitragenden Verbindungen sind bei vorhandener Öffnung zwischen den Bodensockeln allerdings flexibler und können durch die Absturzlasten leichter verformt werden, was zu einer effektiveren Energieaufnahme und Dämpfung im Falle eines Absturzes führt. Durch die Form der umlaufenden geschlossenen Fläche können die Steifigkeitsverhältnisse der freitragenden Verbindung der Membran nach Wunsch beeinflusst werden.

In einer Ausführungsform ist die Form der Membran auf die Form der Unterseite so angepasst, dass die Membran senkrecht zur Rotationsachse nicht über die Unterseite hinausragt. Mit einer entsprechenden Anordnung der unteren und oberen Standeinheiten wird die Last des Maschinengehäuses somit senkrecht nach unten zum Fundament abgeführt. Mit diesen Anordnungen können Dämpfungseinrichtungen zur Verfügung gestellt werden, mit denen der benötigte Bauraum senkrecht zur Rotationsachse zur Verwirklichung der Dämpfungseinrichtung minimal gestattet werden kann. Mit einer solchen Dämpfungseinrichtung können besonders kompakte Schwungrad-Energiespeicher mit einer Vielzahl an Schwungradeinheiten bei geringstmöglicher Bodenfläche des Schwungrad-Energiespeichers bei weiterhin besonders guten Dämpfungseigenschaften zur Verfügung gestellt werden. In einer bevorzugten Ausführungsform umfasst die Unterseite eine umlaufende Randfläche und eine innerhalb der Randfläche befindliche Bodenfläche, wobei die Form der Membran als Projektion der Randfläche parallel zur Rotationsachse dieselbe Form wie die Randfläche besitzt. Damit wird noch weniger Bauraum für die Dämpfungseinrichtung in radialer Richtung zur Rotationsachse des Rotors benötigt. Hierbei können die Randfläche und die Membran entsprechend ringförmig sein. Damit wird ein sogenannter Knackfrosch-Effekt der Membran verhindert.

In einer Ausführungsform ist die Randfläche als Flansch ausgeführt, der über das obere Standelement auf der Membran befestigt ist. Dies ermöglicht eine schnelle und einfache Verbindung des Maschinengehäuses mit der Membran.

In einer Ausführungsform umfasst die Schwungradeinheit eine Montageplatte, auf der die untere Standeinheit zur nachfolgenden Verbindung mit dem Fundament befestigt ist. Dadurch kann die Schwungradeinheit besonders schnell auf dem Boden des Schwungrad-Energiespeichers beziehungsweise des Fundaments befestigt werden.

Die Erfindung betrifft des Weiteren einen Schwungrad-Energiespeicher umfassend eine Mehrzahl an erfindungsgemäßen Schwungradeinheiten, wobei die Schwungradeinheiten mit einem Fundament des Schwungrad-Energiespeichers fest verbunden sind, beispielsweise direkt über das unteren Standelement oder indirekt über eine Montageplatte, auf der das untere Standelement befestigt ist. Die Schwungradeinheiten besitzen hier vorzugsweise Rotoren mit jeweiligen Rotationsachsen senkrecht zum Boden des Schwungrad-Energiespeichers. Der Schwungrad-Energiespeicher kann beispielsweise zusätzlich ein Vakuummodul zur Erzeugung eines für den Betrieb der Schwungradeinheiten benötigten Mindestvakuums in den jeweiligen Schwungradeinheiten, ein oder mehrere Netzanschlussstellen und ein Modulsteuersystem, das für eine geeignete Steuerung zumindest der Schwungradeinheiten und des Vakuummodule und für eine Datenkommunikation über eine Datenschnittstelle zur Ausführung von externen Steuersignalen ausgestaltet ist, umfassen, wobei die eine oder die mehreren Netzanschlussschnittstellen zumindest für den Anschluss an ein lokales (Betriebsnetz, Ortsnetz, Stadtwerkenetz) und/oder nicht lokales Stromnetz (Übertragungs- oder Verteilernetz wie beispielsweise das öffentliche Stromnetz) vorgesehen sind. Der Schwungrad-Energiespeicher kann dabei ein Modulgehäuse umfassen, das geeignet ausgestaltet ist, einen sicheren Transport der sich darin befindlichen Komponenten zu gewährleisten und statische und dynamische Lasten der Schwungradeinheiten im Betrieb aufzunehmen. Für ein robustes Modulgehäuse kann dies beispielsweise zumindest mit einem überwiegenden Anteil aus Beton, Metall oder Stahl gefertigt sein, vorzugsweise ist es vollständig aus Stahl gefertigt.

In einer Ausführungsform ist der Abstand benachbarter Schwungradeinheiten senkrecht zu deren Rotationsachsen im Schwungrad-Energiespeicher kleiner oder gleich 50mm.

In einer Ausführungsform umfasst der Schwungrad-Energiespeicher ein Kühl- und/ oder Heizmodul zur Entfernung zumindest interner thermischer Lasten beim Betrieb der Schwungradeinheiten oder zur Klimatisierung beim Betrieb der Schwungradeinheiten, vorzugsweise auch zur Erhaltung einer Mindesttemperatur. Das Kühlmodul bezeichnet hier eine Vorrichtung zur Anlagenkühlung, damit die internen thermischer Lasten, beispielsweise die elektrischen Verluste, die Reibungswärme beim Betrieb der Schwungradeinheiten und die Abwärme der Module, wie beispielsweise des Vakuummoduls, abgeführt werden können. Eine zu große Innentemperatur des Modulgehäuses führt zu einem erhöhten Ausfallrisiko der sich darin befindlichen Elektronik, insbesondere der Leistungselektronik. Typischerweise sind hier maximale Temperaturen im Modulgehäuse von 45°C zulässig. Ein Heizmodul stellt dagegen sicher, dass Tiefsttemperaturen von 10°C im Modulgehäuse nicht unterschritten werden, um Kondenswasserbildung zu vermeiden. Dabei sind Außentemperaturbereiche von -20°C bis 50°C üblich und im Extremfall Tiefsttemperaturen von -30° und Höchsttemperaturen von 60°C zu tolerieren. Insofern Verluste es zulassen, sind passive Kühlungen/Heizungen wie zum Beispiel Plattenwärmetauscher an der Modulgehäusedecke als Heiz- und Kühlmodul zu bevorzugen, die passiv über Konvektion einen Kühlmittelumstrom und Wärmetausch ermöglichen, da sie den Gesamtanlagenwirkungsgrad weniger negativ beeinflussen.

### Kurze Beschreibung der Abbildungen

Diese und andere Aspekte der Erfindung werden im Detail in den Abbildungen wie folgt gezeigt:
- Fig.1:: ein Ausführungsbeispiel einer erfindungsgemäßen Schwungradeinheit mit Dämpfungseinrichtung in perspektivischer Seitenansicht;
- Fig.2:: ein Ausführungsbeispiel einer erfindungsgemäßen Dämpfungseinrichtung in Draufsicht auf die Membran zur besseren Übersicht ohne oberes Standelement;
- Fig.3:: ein anderes Ausführungsbeispiel einer erfindungsgemäßen Dämpfungseinrichtung im seitlichen Schnitt;
- Fig.4:: ein Ausführungsbeispiel einer erfindungsgemäßen Membran im seitlichen Schnitt;
- Fig.5:: ein Ausführungsbeispiel eines erfindungsgemäßen Schwungrad-Energiespeichers.

### Detaillierte Beschreibung der Ausführungsbeispiele

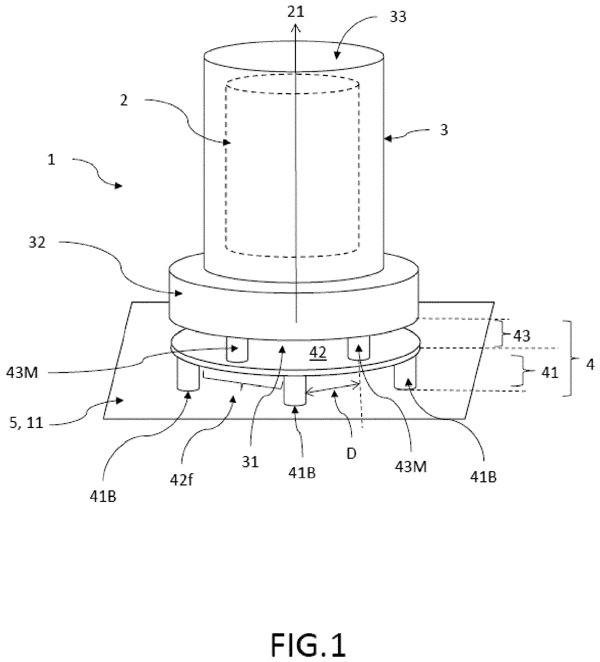

Fig.1 zeigt ein Ausführungsbeispiel einer erfindungsgemäßen Schwungradeinheit 1 mit Dämpfungseinrichtung 4 in perspektivischer Seitenansicht. Hier ist eine Schwungradeinheit 1 mit einen gestrichelt angedeuteten Rotor 2 gezeigt, der von einem Maschinengehäuse 3 zur Absicherung der Umgebung gegenüber dem Rotor 2 umschlossen ist. Das Maschinegehäuse 3 umfasst eine Unterseite 31, an der eine Dämpfungseinrichtung 4 zur Befestigung der Schwungradeinheit 1 auf einem Fundament 11 oder einer Montageplatte 5 befestigt ist. Die Dämpfungseinrichtung 4 umfasst ein unterhalb der Unterseite 31 umlaufendes unteres Standeinheit 41, die in diesem Ausführungsbeispiel durch vier separate Bodensockel 41B mit einer ersten Bodensockelhöhe BH gebildet wird, wobei die Bodensockel 41B in einer Ebene parallel zur Unterseite 31 symmetrisch zueinander um die Rotationsachse 21 des Rotors 2 in einem Viereck angeordnet sind. Der hintere Bodensockel ist in dieser perspektivischen Ansicht von den anderen Komponenten der Dämpfungseinrichtung 4 verdeckt. Die untere Standeinheit 41 ist hier zwischen den Bodensockeln 41B unterhalb der Unterseite 31 hohl. In dieser Ausführungsform ist die Unterseite 31 des Maschinengehäuses 3 auf der Membran 42 in indirekter Weise über das obere Standelement 43 befestigt, das eine Anzahl an Maschinensockel 43 mit einer Maschinensockelhöhe MH umfasst, die zwischen Membran 42 und Grundfläche 31 des Maschinengehäuses 3 auf den freitragenden Bereichen 42f der Membran 42 an jeweiligen Maschinensockelpositionen mit der Membran 42 verbunden sind. Hierbei ist die Anzahl (vier) an Maschinensockeln 43 gleich der Anzahl (vier) an Bodensockeln 412. Durch die perspektivische Ansicht sind zwei Maschinensockel 43 durch die Unterseite 31 des Maschinengehäuses 3 verdeckt. Die Maschinesockelpositionen sind dabei jeweils in dem zwischen zwei benachbarten Bodensockeln 412 und der Rotationsachse 21 des Rotors 2 ausgespannten freitragenden Membransegment angeordnet, wobei die Maschinesockelpositionen in der Membranebene jeweils die gleiche Entfernung D zu den jeweiligen benachbarten Bodensockel 412 besitzen. In einer anderen Ausführungsform könnten auch lediglich drei Bodensockel 41B und drei Maschinensockel 43M verwendet werden, die symmetrisch zueinander zur Aufspannung einer Stützfläche SF in Form eines gleichschenkligen Dreiecks angeordnet sind.

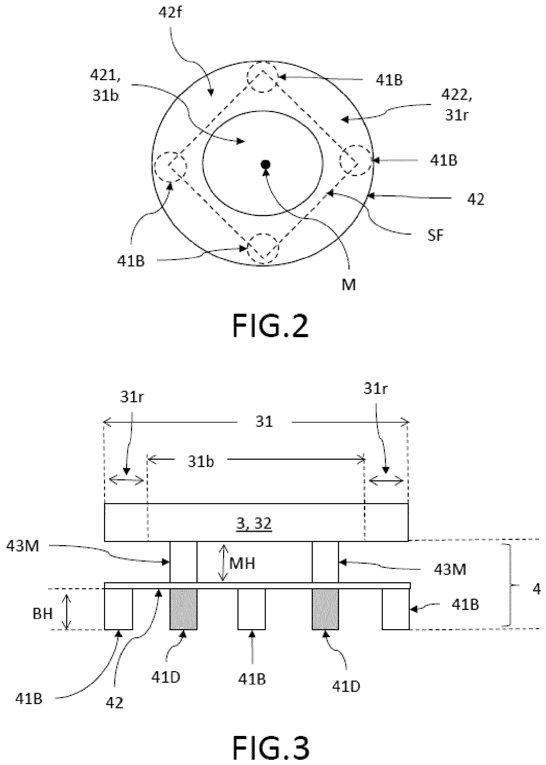

Fig.2 zeigt ein Ausführungsbeispiel einer erfindungsgemäßen Dämpfungseinrichtung 4 in Draufsicht auf die Membran 42 zur besseren Übersicht ohne oberes Standelement 43. Die das Maschinengehäuse 3 tragende Membran 42 ist auf den Oberseiten der Bodensockel 41B befestigt und überspannt hier das untere Standelement 41 vollständig. Der Begriff überspannen schließt dabei grundsätzlich die vollständige oder teilweise Überspannung mit ein, wobei die Überspannung hier so gestaltet ist, dass sich die Projektion des Mittelpunkts M der Unterseite 31 entlang der Rotationsachse 21 des Rotors 2 innerhalb eines durch die separaten Bodensockel 41B mittels der Membran 4 aufgespannten Stützfläche SF befindet. Die Membran 42 ist dabei auf allen den oberen Stirnflächen der vier Bodensockel 41B, die die Auflageflächen 411 bilden, aufgespannt. Über die Anordnung der Bodensockel 41B ist der Grundsockel 31 so ausgestaltet, dass die Membran 42 eine freitragende Verbindung 42f zwischen Maschinengehäuse 3 und den benachbarten Bodensockeln 412 als unteres Standelement 41 herstellt. Die Membran 42 umfasst in diesem Ausführungsbeispiel eine mittlere Öffnung 421 und eine um die Öffnung umlaufende und auf den Bodensockeln 41 B befestigte geschlossene Fläche 422. Vorteilhafterweise kann die Membran 42 eine an die Form der Unterseite 31 angepasste Ringform besitzen, so dass die mit der Membran 42 verbundenen Bodensockel 41B und Maschinensockel 43M (hier aus Übersichtsgründen nicht explizit gezeigt) in radialer Richtung nicht über die Unterseite 31 des Maschinengehäuses 3 hinausragen.

Fig.3 zeigt ein anderes Ausführungsbeispiel einer erfindungsgemäßen Dämpfungseinrichtung 4 im seitlichen Schnitt. Hier sind analog zu Fig.2 vier Bodensockel 41B symmetrisch zueinander angeordnet, wobei der eine Bodensockel 41B (Mitte hinten) vom mittleren Bodensockel 41B (Mitte vorne) verdeckt wird. Auf der auf den Bodensockeln 41 B als untere Standeinheit 41 befestigten Membran 42 sind ebenfalls vier Maschinensockel 43M angeordnet, die in einer um 45o gegenüber den Bodensockeln 41B gedrehten Anordnung auf der Membran 42 angeordnet sind, wobei die beiden hinteren Maschinensockel 43M von den beiden vorderen Maschinensockeln 43M verdeckt werden. Auf den Maschinensockeln 43M als obere Standeinheit 43. In diesem Ausführungsbeispiel umfasst die untere Standeinheit 41 zusätzlich vier Dämpfungselemente 41D (grau dargestellt), die jeweils an den der Maschinesockelpositionen unterhalb der Maschinensockel 43M angeordnet sind und die die Membran 42 gegen das Fundament (hier nicht gezeigt) federnd abstützen. Dadurch kann die gleiche Dämpfungseinrichtung 4 für unterschiedliche Massen des Maschinengehäuses 3 und Rotors 2 verwendet werden. Das Maschinegehäuse 3 ist hier aus Übersichtsgründen nur angedeutet. Die Form der Membran 42 ist hier auf die Form der Unterseite 31 so angepasst, dass die Membran senkrecht zur Rotationsachse nicht über die Unterseite 31 hinausragt. Die Unterseite 31 umfasst hier eine umlaufende Randfläche 31r und eine innerhalb der Randfläche 31r befindliche Bodenfläche 31b, wobei die Form der Membran 42 als Projektion der Randfläche 31r parallel zur Rotationsachse 21 dieselbe Form wie die Randfläche 31r besitzen kann. Sofern die Randfläche 31r ringförmig ist, ist damit auch die Membran 42 entsprechend ringförmig ausgestaltet.

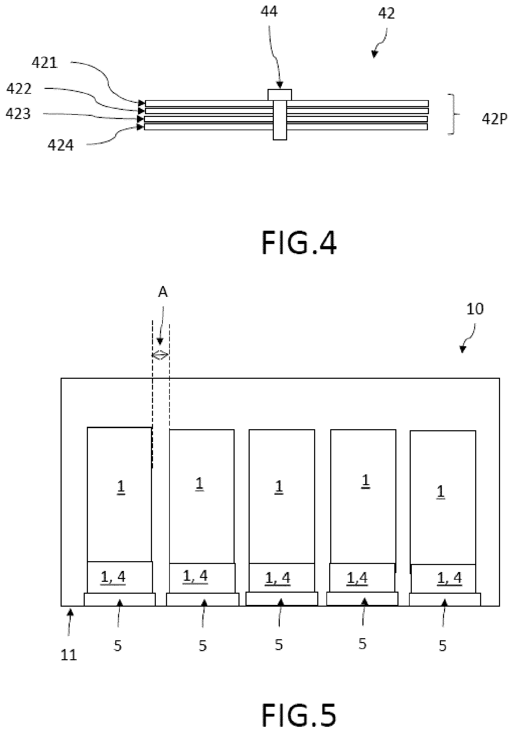

Fig.4 zeigt ein Ausführungsbeispiel einer erfindungsgemäßen Membran 42 im seitlichen Schnitt. Die Membran 42 besteht hier aus einem Membranpaket 42P aus vier übereinander angeordneten Metallschichten 421, 422, 423, 424, die lediglich am Montagepunkte 44 fest miteinander und mit dem Grund- oder Bodensockel 41, 412 verbunden sind. Bei einem Absturz des Rotors 2 verformen sich die Metallschichten 421, 422, 423, 424 und reiben daher bei der Aufnahme der freiwerdenden Energie während des Absturzes aneinander, was die Absturzlast zusätzlich aufnimmt und die Bewegung des Maschinengehäuses 3 zusätzlich dämpft. Hierbei können die Materialschichten 421, 422, 423, 424 abwechselnd als tragende Materialschicht 422, 424 (beispielsweise als Metallschicht) und dämpfende Materialschicht 421, 423 (beispielsweise aus CFVK-Verbundmaterial oder ein anders Material, beispielsweise Kunststoff) ausgeführt sein.

Fig.5 zeigt ein Ausführungsbeispiel eines erfindungsgemäßen Schwungrad-Energiespeichers 10, der eine Mehrzahl an Schwungradeinheiten 1 angeordnet in Reihen von je fünf Schwungradeinheiten 1 umfasst, wobei die Schwungradeinheiten 1 mit dem Boden 11 des Schwungrad-Energiespeichers 10 jeweils über eine Montageplatte 5 zwischen Dämpfungseinrichtung 4 und Boden 11 fest verbunden sind. Der Abstand A benachbarter Schwungradeinheiten 1 senkrecht zu deren Rotationsachsen 21 im Schwungrad-Energiespeicher 10 kann durch die Verwendung der erfindungsgemäßen Dämpfungseinrichtung 4 kleiner oder gleich 50mm gewählt werden, wodurch ein besonders kompakter Schwungrad-Energiespeicher 10 mit einer bei einem gegebenen Volumen des Schwungrad-Energiespeichers 10 besonders hohen Anzahl an Schwungradeinheiten 1. Zur Verfügung gestellt wird. Im Schwungrad-Energiespeichers 10 können beispielsweise achtundzwanzig Schwungradeinheiten 1 angeordnet, die über einen elektrischen Zwischenkreis zur Bereitstellung einer gemeinsamen Speicherkapazität und Leistung verbunden sind. Die Anzahl der Schwungradeinheiten 1 ist darauf angepasst, dass das Schwungrad-Energiespeichers 10 über die so bereitgestellte Gesamtkapazität und Leistung über einen Zeitraum von mehr als 30 s Strom in ein angeschlossenes Stromnetz 5 einspeisen kann. Die einzelnen Schwungradeinheiten 1 können dabei im Mittel 20kW an Leistung transferieren. Damit hat dieses Schwungrad-Energiespeichers 10 eine Gesamtkapazität von 560kW. Die Anzahl der Schwungradeinheiten 1 in einem Schwungrad-Energiespeichers 10 kann von Schwungrad-Energiespeicher zu Schwungrad-Energiespeicher variieren.

Die hier gezeigten Ausführungsbeispiele stellen nur Beispiele für die vorliegende Erfindung dar und dürfen daher nicht einschränkend verstanden werden. Alternativen durch den Fachmann in Erwägung gezogene Ausführungsformen sind gleichermaßen vom Schutzbereich der vorliegenden Erfindung, der durch die Patentansprüche definiert wird, umfasst.

### Liste der Bezugszeichen

- 1: Schwungradeinheit
- 2: Rotor
- 21: Rotationsachse des Rotors
- 3: Maschinengehäuse
- 31: Unterseite des Maschinengehäuses
- 31r: Randfläche der Unterseite
- 31b: Bodenfläche der Unterseite
- 32: Flansch
- 33: Oberseite des Maschinengehäuses
- 4: Dämpfungseinrichtung
- 41: untere Standeinheit
- 41B: Bodensockel
- 41D: Dämpfungselement (in der unteren Standeinheit)
- 42: Membran
- 421: mittlere Öffnung in der Membran
- 422: um die Öffnung umlaufende geschlossene Fläche
- 42f: freitragende Verbindung
- 42P: Membranpaket
- 421 - 424: Materialschichten in dem Membranpaket
- 43: obere Standeinheit
- 43M: Maschinensockel
- 44: Montagepunkte
- 5: Montageplatte
- 10: Schwungrad-Energiespeicher
- 11: Fundament (Boden) des Schwungrad-Energiespeichers

- A: Abstand benachbarter Schwungradeinheiten im Schwungrad-Energiespeicher
- BH: Bodensockelhöhe (der Bodensockel)
- D: Entfernung Maschinensockelposition zu benachbarten Bodensockeln
- M: Mittelpunkt der Unterseite
- MH: Maschinensockelhöhe (der Maschinensockel)
- SF: Stützfläche

## Patentansprüche

1. Eine Schwungradeinheit (1) für einen Schwungrad-Energiespeicher (10) umfassend einen Rotor (2), ein den Rotor (2) umschließendes Maschinengehäuse (3) mit einer Unterseite (31), und eine an der Unterseite (31) des Maschinengehäuses (3) befestigte Dämpfungseinrichtung (4) zur Befestigung der Schwungradeinheit (1) auf einem geeigneten Fundament (11), wobei die Dämpfungseinrichtung (4) eine untere Standeinheit (41) zur Befestigung auf dem Fundament (11) und eine obere Standeinheit (43) zur Befestigung an der Unterseite (31) des Maschinengehäuses (31) umfasst, **dadurch gekennzeichnet, dass** die Dämpfungseinrichtung ferner eine Membran, die die untere Standeinheit (41) mit der oberen Standeinheit (43) verbindet, umfasst, wobei die obere und untere Standeinheit (41, 43) sowie die Membran so ausgestaltet sind, dass die Membran (42) eine freitragende biegeweiche Verbindung (42f) zwischen oberer und unterer Standeinheit (41, 43) herstellen kann.

2. Die Schwungradeinheit (1) nach Anspruch 1,
**dadurch gekennzeichnet,**
**dass** die untere Standeinheit (41) mindestens drei zueinander separate Bodensockel (41B) mit einer ersten Bodensockelhöhe (BH) umfasst, auf denen die Membran (42) aufgespannt ist, wobei die Bodensockel (41B) so zueinander angeordnet sind, dass sich die Projektion des Mittelpunkts (M) der Unterseite (31) entlang der Rotationsachse (21) des Rotors (2) innerhalb eines durch die separaten Bodensockel (41B) aufgespannten Stützfläche (SF) befindet.

3. Die Schwungradeinheit nach Anspruch 2,
**dadurch gekennzeichnet,**
**dass** die separaten Bodensockel (41B) der unteren Standeinheit (41) in einer Ebene parallel zur Grundfläche (31) symmetrisch zueinander um die Rotationsachse (21) des Rotors (2) angeordnet sind.

4. Die Schwungradeinheit (1) nach Anspruch 2 oder 3,
**dadurch gekennzeichnet,**
**dass** die obere Standeinheit (43) eine Anzahl an Maschinensockel (43M) mit einer Maschinensockelhöhe (MH) umfasst, die zwischen Membran (42) und Grundfläche (31) des Maschinengehäuses (3) auf den freitragenden Bereichen (42f) der Membran (42) an jeweiligen Maschinensockelpositionen mit der Membran (42) verbunden sind.

5. Die Schwungradeinheit (1) nach Anspruch 4,
**dadurch gekennzeichnet,**
**dass** sich die Maschinesockelpositionen jeweils in dem zwischen zwei benachbarten Bodensockeln (41B) und der Rotationsachse (21) des Rotors (2) ausgespannten Membransegment befinden

6. Die Schwungradeinheit (1) nach Anspruch 5,
**dadurch gekennzeichnet,**
**dass** die Anzahl an Maschinensockeln (43M) gleich der Anzahl an Bodensockeln (41B) ist und die Maschinesockelpositionen in der Membranebene jeweils die gleiche Entfernung (D) zu den jeweiligen benachbarten Bodensockel (41B) besitzen.

7. Die Schwungradeinheit (1) nach einem der voranstehenden Ansprüche,
**dadurch gekennzeichnet,**
**dass** die untere Standeinheit (41) zusätzlich ein oder mehrere Dämpfungselemente (41D) umfasst, die unterhalb der Maschinesockelpositionen angeordnet sind und die die Membran (42) gegen das Fundament (11) federnd abstützen.

8. Die Schwungradeinheit (1) nach einem der voranstehenden Ansprüche,
**dadurch gekennzeichnet,**
**dass** die Membran (42) eine mittlere Öffnung (421) und eine um die Öffnung umlaufende und auf der unteren Standeinheit (41) befestigte geschlossene Fläche (422) umfasst.

9. Die Schwungradeinheit (1) nach einem der voranstehenden Ansprüche,
**dadurch gekennzeichnet,**
**dass** die Form der Membran (42) auf die Form der Unterseite (31) so angepasst ist, dass die Membran senkrecht zur Rotationsachse nicht über die Unterseite hinausragt.

10. Die Schwungradeinheit (1) nach Anspruch 9,
**dadurch gekennzeichnet,**
**dass** die Unterseite (31) eine umlaufende Randfläche (31r) und eine innerhalb der Randfläche (31r) befindliche Bodenfläche (31b) umfasst, wobei die Form der Membran als Projektion der Randfläche (31r) parallel zur Rotationsachse (21) dieselbe Form wie die Randfläche (31r) besitzt.

11. Die Schwungradeinheit (1) nach Anspruch 10,
**dadurch gekennzeichnet,**
**dass** die Randfläche (31r) ringförmig ist und dass die Membran (42) entsprechend ringförmig ist

12. Die Schwungradeinheit (1) nach einem der voranstehenden Ansprüche,
**dadurch gekennzeichnet,**
**dass** die Membran (42) ein Membranpaket (42P) aus einer Mehrzahl an übereinander angeordneten Materialschichten (421, 422, 423, 424) umfasst.

13. Die Schwungradeinheit (1) nach Anspruch 12,
**dadurch gekennzeichnet,**
**dass** das Membranpaket (42P) zumindest teilweise abwechselnd angeordnete tragende und dämpfende Materialschichten (421, 422, 423, 424) umfasst.

14. Ein Schwungrad-Energiespeicher (10) umfassend eine Mehrzahl an Schwungradeinheiten (1) nach Anspruch 1, wobei die Schwungradeinheiten (1) mit einem Fundament (11) des Schwungrad-Energiespeichers (10) fest verbunden sind.

15. Der Schwungrad-Energiespeicher (10) nach Anspruch 14,
**dadurch gekennzeichnet,**
**dass** der Abstand (A) benachbarter Schwungradeinheiten (1) senkrecht zu deren Rotationsachsen (21) im Schwungrad-Energiespeicher (10) kleiner oder gleich 50mm ist.

## Claims

1. A flywheel unit (1) for a flywheel energy storage (10) comprising a rotor (2), a machine housing (3) enclosing the rotor (2), the housing having a bottom face (31), and a damping device (4) attached to the bottom face (31) of the machine housing (3) for fastening the flywheel unit (1) to a suitable foundation (11), the damping device (4) comprising a lower base unit (41) for attachment to the foundation (11) and an upper base unit (43) for attachment to the bottom face (31) of the machine housing (31),
**characterized in that**
the damping device further comprises a membrane which connects the lower base unit (41) to the upper base unit (43), the upper and the lower base unit (41, 43) as well as the membrane being embodied such that the membrane (42) can establish a cantilever flexible connection (42f) between the upper and the lower base unit (41, 43).

2. The flywheel unit (1) according to Claim 1,
**characterized in that**
the lower base unit (41) comprises at least three mutually separate feet (41B) with a first foot height (BH) over which the membrane (42) is tensioned, the feet (41B) being arranged such with respect to each other that the projection of the central point (M) of the bottom face (31) along the rotational axis (21) of the rotor (2) is located within a supporting surface (SF) tensioned by the separate feet (41B).

3. The flywheel unit according to Claim 2,
**characterized in that**
the separate feet (41B) of the lower base unit (41) are arranged on a plane parallel to the bottom face (31) around the rotational axis (21) of the rotor (2), symmetrically with respect to each other.

4. The flywheel unit (1) according to Claim 2 or 3,
**characterized in that**
the upper base unit (43) comprises a number of machine pedestals (43M) with a machine pedestal height (MH), the pedestals being connected to the membrane (42) between the membrane (42) and the bottom face (31) of the machine housing (3) at the cantilever portions (42f) of the membrane (42) in respective machine pedestal positions.

5. The flywheel unit (1) according to Claim 4,
**characterized in that**
each of the machine pedestal positions is located in the membrane segment tensioned between two neighboring feet (41B) and the rotational axis (21) of the rotor (2).

6. The flywheel unit (1) according to Claim 5,
**characterized in that**
the number of machine pedestals (43M) is equal to the number of feet (41B) and each of the machine pedestal positions on the membrane plane is at the same distance (D) from the respective neighboring foot (41B).

7. The flywheel unit (1) according to one of the above Claims,
**characterized in that**
the lower base unit (41) additionally comprises one or more damping elements (41D) which are arranged beneath the machine pedestal positions and elastically support the membrane (42) with respect to the foundation (11).

8. The flywheel unit (1) according to one of the above Claims,
**characterized in that**
the membrane (42) comprises a central opening (421) and a closed surface (422) circumferential around the opening and attached to the lower base unit (41).

9. The flywheel unit (1) according to one of the above Claims,
**characterized in that**
the shape of the membrane (42) is adapted to the shape of the bottom face (31) such that the membrane does not protrude beyond the bottom face vertically to the rotational axis.

10. The flywheel unit (1) according to Claim 9,
**characterized in that**
the bottom face (31) comprises a circumferential lateral face (31r) and a bottom surface (31b) located inside the lateral face (31r), the membrane as a projection of the lateral face (31r) parallel to the rotational axis (21) having the same shape as the lateral face (31r).

11. The flywheel unit (1) according to Claim 10,
**characterized in that**
the lateral face (31r) is annular and the membrane (42) is accordingly annular as well.

12. The flywheel unit (1) according to one of the above Claims,
**characterized in that**
the membrane (42) comprises a membrane pack (42P) consisting of a plurality of material layers (421, 422, 423, 424) arranged on top of each other.

13. The flywheel unit (1) according to Claim 12,
**characterized in that**
the membrane pack (42P) comprises supporting and damping material layers (421, 422, 423, 424) which are at least partially arranged so as to alternate.

14. A flywheel energy storage (10) comprising a plurality of flywheel units (1) according to Claim 1, the flywheel units (1) being permanently connected to a foundation (11) of the flywheel energy storage (10).

15. The flywheel energy storage (10) according to Claim 14,
**characterized in that**
the distance (A) between neighboring flywheel units (1) vertical to their rotational axes (21) in the flywheel energy storage (10) is less than or equal to 50 mm.

## Revendications

1. Unité de volant (1) pour un accumulateur d'énergie à volant (10) comprenant un rotor (2), un carter de machine (3) entourant le rotor (2) avec une face inférieure (31), et un dispositif d'amortissement (4) fixé à la face inférieure (31) du carter de machine (3) pour la fixation de l'unité de volant (1) sur une semelle (11) appropriée, dans laquelle le dispositif d'amortissement (4) comprend une unité à pieds inférieure (41) pour la fixation sur la semelle (11) et une unité à pieds supérieure (43) pour la fixation sur la face inférieure (31) du carter de machine (31),
**caractérisée en ce que** le dispositif d'amortissement comprend en outre une membrane qui relie l'unité à pieds inférieure (41) à l'unité à pieds supérieure (43), dans laquelle les unités à pieds supérieure et inférieure (41, 43) ainsi que la membrane sont réalisées de telle sorte que la membrane (42) puisse établir une liaison en porte-à-faux souple en flexion (42f) entre les unités à pieds supérieure et inférieure (41, 43).

2. Unité de volant (1) selon la revendication 1,
**caractérisée en ce que** l'unité à pieds inférieure (41) comprend au moins trois socles de sol (41B) séparés les uns des autres avec une première hauteur de socle (BH) sur lesquels la membrane (42) est tendue, dans laquelle les socles de sol (41B) sont agencés les uns par rapport aux autres de manière à ce que la projection du point central (M) de la face inférieure (31) le long de l'axe de rotation (21) du rotor (2) se trouve à l'intérieur d'une surface de support (SF) tendue grâce aux socles de sol séparés (41B).

3. Unité de volant selon la revendication 2,
**caractérisée en ce que** les socles de sol séparés (41B) de l'unité à pieds inférieure (41) sont disposés dans un plan parallèle à la surface de base (31) de manière symétrique entre eux autour de l'axe de rotation (21) du rotor (2).

4. Unité de volant (1) selon la revendication 2 ou 3,
**caractérisée en ce que** l'unité à pieds supérieure (43) comprend un certain nombre de socles de machine (43M) avec une hauteur de socle de machine (MH) lesquels sont reliés, entre la membrane (42) et la surface de base (31) du carter de machine (3), sur les zones en porte-à-faux (42f) de la membrane (42), au niveau de positions respectives de socle de machine, à la membrane (42).

5. Unité de volant (1) selon la revendication 4,
**caractérisée en ce que** les positions de socles de machine se trouvent respectivement dans le segment de membrane tendu entre deux socles de sol (41B) voisins et l'axe de rotation (21) du rotor (2).

6. Unité de volant (1) selon la revendication 5,
**caractérisée en ce que** le nombre de socles de machine (43M) est égal au nombre de socles de sol (41B) et que les positions de socles de machine dans le plan de membrane présentent respectivement la même distance (D) par rapport aux socles de sol (41B) voisins respectifs.

7. Unité de volant (1) selon l'une des revendications précédentes,
**caractérisée en ce que** l'unité à pieds inférieure (41) comprend additionnellement un ou plusieurs éléments d'amortissement (41D) disposés en-dessous des positions de socles de machine et qui supportent élastiquement la membrane (42) à l'encontre de la semelle (11).

8. Unité de volant (1) selon l'une des revendications précédentes,
**caractérisée en ce que** la membrane (42) comprend une ouverture centrale (421) et une surface fermée (422) faisant le tour de l'ouverture et fixée sur l'unité à pieds inférieure (41).

9. Unité de volant (1) selon l'une des revendications précédentes,
**caractérisée en ce que** la forme de la membrane (42) est adaptée à la forme de la face inférieure (31) de telle sorte que la membrane ne dépasse pas de la face inférieure perpendiculairement à l'axe de rotation.

10. Unité de volant (1) selon la revendication 9,
**caractérisée en ce que** la face inférieure (31) comprend une surface de bord périphérique (31r) et une surface de sol (31b) se trouvant à l'intérieur de la surface de bord (31r), dans laquelle la forme de la membrane possède, en tant que projection de la surface de bord (31r) parallèlement à l'axe de rotation (21), la même forme que la surface de bord (31r).

11. Unité de volant (1) selon la revendication 10,
**caractérisée en ce que** la surface de bord (31r) est de forme annulaire et que la membrane (42) est annulaire de manière correspondante.

12. Unité de volant (1) selon l'une des revendications précédentes,
**caractérisée en ce que** la membrane (42) comprend un paquet de membrane (42P) en une pluralité de couches de matériau (421, 422, 423, 424) disposées les unes au-dessus des autres.

13. Unité de volant (1) selon la revendication 12,
**caractérisée en ce que** le paquet de membrane (42P) comprend des couches de matériau porteuses et amortissantes (421, 422, 423, 424) disposées au moins partiellement en alternance.

14. Accumulateur d'énergie à volant (10) comprenant une pluralité d'unités de volant (1) selon la revendication 1, dans lequel les unités de volant (1) sont reliées de manière fixe à une semelle (11) de l'accumulateur d'énergie à volant (10).

15. Accumulateur d'énergie à volant (10) selon la revendication 14,
**caractérisé en ce que** la distance (A) d'unités de volant (1) voisines perpendiculairement aux axes de rotations (21) de celles-ci dans l'accumulateur d'énergie à volant (10) est inférieure ou égale à 50 mm.
